# EUROPEAN PATENT APPLICATION

(11) **EP 1 376 813 A1**
(43) Date of publication of application: **02.01.2004**
(21) Application number: 02024264.0
(22) Date of filing: 31.10.2002
(51) Int. Cl.: H02J 7/00

(54) **Electronic device, battery, and method for transporting current**

(71) Applicant: SIEMENS AKTIENGESELLSCHAFT, 80333 München (DE)
(72) Inventor: Leegaard, Henrik, 9220 Aalborg Oest (DK)

(57) **Abstract**

A portable electric device (10) includes i) an electric circuit (12) operable on electric current derived from a first connector (B) preferably connectable to a first counterpart connector (B') of a battery (11), ii) a charge input (13) electrically connected to a second connector (A) preferably adapted to charge the battery (11) through a second counterpart connector (A') of the battery (11), iii) first means (21) for transporting an electric current from the charge input (13) to the second connector (A), and iv) second means (22) separate from the first means (21) for transporting current from the first connector (B) to the electric circuit (12).

## Description

### Field of the invention

The invention relates to electronic devices and batteries to be used therein, and, more specifically, to arrangements used to transport current to such electronic devices.

### Background of the invention

Portable electronic devices have become a part of everyday life for many consumers in western countries. Typically, instead of using a disposable battery, such as 1,5 Volt alkaline-manganese dry-pair, usually rechargeable batteries are used. For example, Lithium-Ion (Li-Ion) batteries have a nominal threshold of 4,2 Volt, and for the Nickel-Metal-Hydride (NiMH) battery units the threshold is 5,1 Volt. This corresponds to a maximum charge voltage threshold of 4,7 Volt for Li-Ion batteries and a 5,7 Volt threshold for NiMH batteries.

As a practical limitation for the operation of the portable electronic device, the battery runs usually after some time out of charge, and therefore has to be recharged. Therefore, many systems are connectable to a battery charger, and in order to maximise the comfort of usage, the battery does not need to be removed, but the charger may just be plugged into the charger connector.

If, for some reason, the user has removed the battery from the device, and despite this connects the charger to the device, the open circuit voltage of the charger unit may be higher than the maximum voltage limit of the circuit contained in the device. Then the portable electronic device may be broken due to a high voltage transient. For mobile phones, especially critical part has turned out to be the transmitter unit.

One easy and very straightforward way to avoid this problem would be to lower and tighten the maximum charge voltage threshhold. At the moment, the threshold tolerances for the voltage detection is approximately 4% of the nominal voltage. On one hand, this would lead to increased cost of the charge units, because it would be technically more challenging to produce such charge units. On the other hand, then the operating range of the electronic device would be too close to the maximum charging voltage during normal condition, which would easily lead to faulty detection of an over voltage condition.

Another solution would be to use a battery detector, in the manner prescribed in German patent application DE 39 26 655 A1. In the '655 solution, the battery detector instructs the charger equipment that a battery has been installed so that the operation of the battery charger can be modified. Such a solution, however, does not offer maximal simplicity for the electromechanical design of the portable electrical device, because the battery detector part has to be implemented.

Therefore, it remains to be a problem, how to avoid voltage transients resulting from the connection of charging equipment into portable electronic devices, when the battery is not present in the device.

### Summary of the invention

This and other objectives of the invention can be achieved with a method and a system according to any one of the independent patent claims.

A portable electronic device includes i) an electric circuit operable on electric current derived from a first connector preferably connectable to a first counterpart connector of a battery, ii) a charge input electrically connected to a second connector preferably adapted to charge the battery through a second counterpart connector of the battery, iii) first means for transporting an electric current from the charge input to the second connector, and iv) second means separate from the first means for transporting current from the first connector to the electric circuit. As an advantage of the portable device according to the present invention, high resistivity against voltage transients and hardware malfunction can be obtained, and this even without using any complex battery detector.

According to one further aspect of the present invention, the first connector is electrically connected to the second connector only via third means in the battery when the battery has been installed into the device. Such a construction makes the design of such electronic devices much easier, because the electrical connection issues can be left to the battery manufacturer to be solved by him/herself, thus releasing research & development resources from the manufacturer of said portable electronic devices.

According to one further aspect of the present invention, the portable electronic device may further comprise a control part of the first means controllable by a control circuit responsive to the potential of the first connector or the second connector. In this way also the charging of the battery can be controlled, and, further if the control circuit gets its operating current from the second connector, the probability of the control circuit breakdown because of voltage transients is further reduced.

According to one further aspect of the present invention, the portable electronic device includes a ground connector which has been adapted to contact a counterpart connector of the battery before other voltage-carrying counterpart connectors of the battery contact other connectors of the device. This further reduces the probability of hardware breakdowns.

A battery to be used in a portable electronic device according includes i) a first counterpart connector for connecting the second connector, ii) a second counterpart connector for connecting the first connector, and iii) means for electrically contacting the first and second counterpart connectors. Such a battery enables the use of devices like above described, and, therefore does its own part in enhancing the reliability of portable electronic devices, especially what comes to equipment damages if the battery is to be charged.

According to one further aspect of the present invention, the battery further includes a ground counterpart connector for contacting the ground connector before any other counterpart connector are electrically connected to corresponding connectors. This kind of constructional solution is particularly useful when combined with a corresponding design of the portable electronic device, and especially its battery socket.

### Brief description of the drawings

In the following, the invention and its preferred embodiments are described more closely referring to the examples shown in Figures 1 to 3 in the appended drawings, wherein:
- Figure 1: illustrates a block diagram of a portable electronic device (10), with a battery (11), and a charger (14);
- Figure 2: illustrates a more detailed block diagram of the portable electronic device (10); and
- Figure 3: shows a more detailed block diagram of the battery (11) to be used in the portable electronic device (10) .

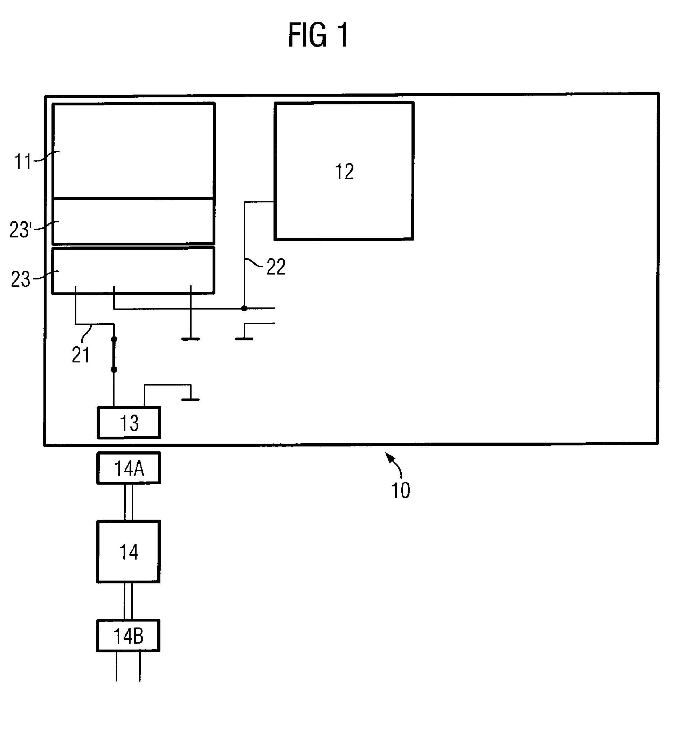

Like reference signs refer to corresponding parts and elements throughout Figures 1-3.

### Detailed description of the invention

Figure 1 shows an example of a block diagram of a portable electronic device 10 which has a battery 11 installed. In normal operating mode, the electric circuit 12 gets electric energy (current) needed for its normal operating from the battery 11. Therefore, the portable electronic device 10 has, as usual, a battery socket 23, and the battery 11 has battery contacts 23'. Electric current is transported from the battery 11 via battery contacts 23', battery socket 23, and conductor 22 from battery socket 23 to electric circuit 12.

Whenever battery 11 needs to be recharged, the charger 14 is used. The mains connector 14B is connected to mains, e.g. 230 Volt AC in most European countries, and the transformer contained in the charger 14, together with some other common electric components, turn the electric current into nice DC, which then can be used for charging the battery by plugging the charger plug 14A into the charge connector 13. The charge connector 13, in other words, then corresponds to charge input. The current from the charge connector 13 is then lead to battery socket 23 using a conductor 21.

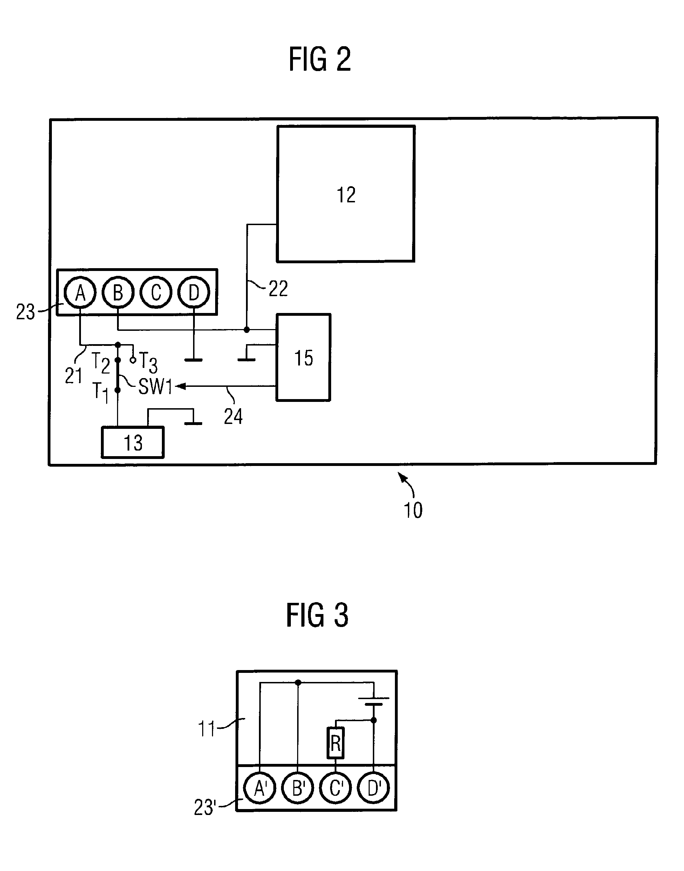

Figure 2 illustrates a more detailed block diagram of the portable electronic device 10. The battery socket 23 includes connectors A, B, C, and D which are used to make an electric contact to the battery 11, when it is present in the device.

The charge control circuit 15 monitors the voltage over the connector B. If the voltage over connector B exceeds a preset threshold value, the charge control circuit 15 signals using control signal lead 24 that the charging of the battery 11 has to be terminated. The termination of the charging can be performed in an easy manner by changing the position of the switch SW1 to connect connectors T₁ to T₃. Normally, when the battery 11 is being charged, the swith SW1 connects connectors T₁ and T₂. Therefore, control part can be understood to comprise the swich SW1 and the connectors T₁, T₂, and T₃, and the control part is then being controlled by the charge control circuit 15, responsive to the potential of the connectors A and/or B.

As a difference to the state of art solutions, the charge control circuit 15 and the electric circuit 15 do not take their input current from the conductor 21, i.e. from the conductor from charge connector 13 to battery socket 23. Instead of this kind of solution suffering from the danger of hardware failure to voltage transients caused by attaching and/or removing the charger 14 to the portable electronic device 10 when the battery 11 is absent, the charge control circuit 15 and/or electric circuit 15 is made, according to one aspect of the present invention, to obtain the operating current needed from another connector, i.e. from connector B, of the battery socket 23.

Figure 3 illustrates closerly this kind of construction. According to one aspect of the present invention, the battery 11 has counterpart connectors A', B', C', and D' installed in the battery contacts part 23'. The internal wiring, i.e. conductor 25 connects counterpart connectors A' and B'. The couterpart connector A' is used for charging the battery, whereas the counterpart connector B' is used for current output from the battery. The battery 11 includes electrochemical structure known as such, and, typically, the counterpart connector D' can be used for completing the electric circuit. Counterpart connector C' can be used for other purposes, such as detecting the type of the battery, and so forth.

In order to further reduce the risk of voltage transient and thus to decrease the fault rate of the equipment, the connectors A, B, C, and D can be arranged in such a way, the the ground connector D connects the corresponding counterpart connector D' of the battery 11 before voltage-carrying counterpart connectors A', B' of the battery 11 contact other corresponding connectors A, B of the electronic device 10. This can be achieved, for example, by elongating the counterpart connector D' of the battery 11, so that it gets first connected. To further elongate the counterpart connector D', it is possible to construct different kinds of mechanical systems, such as a metallic pin attached to a spring element with low resistivity so that the metallic pin is compressed a bit when the battery is being installed.

The portable electronic device may, in principle, be any kind of device. The most benefits, however, are obtained for such devices, for which the user of the device 10 may be willing to change the battery. Examples of such devices are mobile phones, laptops, Personal Digital Assistants, and so forth. Especially, if the battery is located under cover, say, inside the housing of the device 10, the problem caused by the voltage transients, i.e. the device breaking because the user connects the charger 14 when the battery 11 is not present.

Although the invention was described above with reference to the examples shown in the appended drawings, it is obvious that the invention is not limited to these but may be modified by those skilled in the art without difference from the scope and the spirit of the invention. For example, the modifications of the counterpart connector D' can be replaced or accomplished with modifications of the connector D, or both.

### List of used references

- 10: portable electronic device
- 11: battery
- 12: electric circuit
- 13: charge connector
- 14: charger
- 14A: charger plug
- 14B: mains connector
- 15: charge control circuit
- 21: conductor from charge connector to battery socket
- 22: conductor from battery socket to electronic circuitry
- 23: battery socket
- 23': battery contacts
- 24: control signal lead
- 25: conductor from A' to B'

- T1, T2, T3: connectors
- SW1: switch
- A, B, C, D: connectors in the battery socket
- A', B', C', D': counterpart connectors in the battery

## Claims

1. A portable electric device (10) including:
- an electric circuit (12) operable on electric current derived from a first connector (B) preferably connectable to a first counterpart connector (B') of a battery (11);
- a charge input (13) electrically connected to a second connector (A) preferably adapted to charge the battery (11) through a second counterpart connector (A') of the battery (11);
- first means (21) for transporting an electric current from the charge input (13) to the second connector (A); and
- second means (22) separate from the first means (21) for transporting current from the first connector (B) to the electric circuit (12).

2. A device (10) according to claim 1, **wherein:** the first connector (B) is electrically connected to the second connector (A) only via third means (25) in the battery (11) when the battery (11) has been installed *in*/*into* the device (10).

3. A device (10) according to any one of the preceding claims further **comprising:** a control part (T₁, T₂, T₃) of the first means (21) controllable by a control circuit (15) responsive to the potential of the first connector (B) or the second connector (A).

4. A device (10) according to any one of the preceding claims
**characterised in that**:
the device (10) further includes a ground connector (D).

5. A device (10) according to claim 4,
**characterised in that**:
the ground connector (D) being adapted to contact a counterpart connector (D') of the battery (11) before other voltage-carrying counterpart connectors (A', B') of the battery (11) contact other connectors (A, B) of the device (10).

6. A battery (11) to be used in a device according to any one of the preceding claims, the battery (11)
**characterised in that**
it includes:
a first counterpart connector (A') for connecting the second connector (A);
- a second counterpart connector (B') for connecting the first connector (B); and
- means (25) for electrically contacting the first and second counterpart connectors (A', B').

7. A battery (11) according to claim 6,
**characterised in that**
it further includes: a ground counterpart connector (D') for contacting the ground connector (D) before any other counterpart connector (A', B') are electrically connected to corresponding connectors (A, B).

8. A method for transmitting an electric current from a charge input (13) to an elecric circuit (12) in a device (10), the method
**characterised in that**
it includes the steps of:
- transmitting an electric current from a charge input (13) to a first connector (A), the first connector (A) being adapted to charge a battery (11) through a first counterpart connector (A') of the battery (11); and
- transmitting an electric current from a second connector (B) to an electric circuit (12), the second connector (B) being adapted to recharge the battery (11) through a second counterpart connector (B') of the battery (11).

9. A method according to claim 8, the method further comprising the step of: electrically connecting the first counterpart connector (A') to the second counterpart connector (B').

10. A mobile phone, a laptop computer, or a Personal Digital Assistant according to any one of claims 1-5, wherein: a battery according to claim 6 or 7, and/or a method according to claim 8 or 9 is used.
